# EUROPEAN PATENT APPLICATION

(11) **EP 4 556 082 A1**
(43) Date of publication of application: **21.05.2025**
(21) Application number: 23839340.9
(22) Date of filing: 01.06.2023
(51) Int. Cl.: A62D 1/00

(54) **FIRE EXTINGUISHING MATERIAL AND FIRE EXTINGUISHING MATERIAL PACKAGE**

(30) Priority: 15.07.2022 JP 2022113812
(71) Applicant: Toppan Holdings Inc., Tokyo 110-0016 (JP)
(72) Inventor: SHIINE Yasuharu, Tokyo 110-0016 (JP); KAKEGAWA Shunta, Tokyo 110-0016 (JP); KUROKAWA Masato, Tokyo 110-0016 (JP); HONJO Yusaku, Tokyo 110-0016 (JP)
(74) Representative: Hoffmann Eitle
(86) International application number: PCT/JP2023/020470
(87) International publication number: WO 2024/014163

(57) **Abstract**

A fire-extinguishing material including a fire-extinguishing agent layer containing a fire-extinguishing agent and a binder resin, in which the fire-extinguishing agent contains at least one of an organic salt and an inorganic salt, and the fire-extinguishing agent layer has a porosity of 37% or less in a cross section thereof.

## Description

### [Technical Field]

The present invention relates to a fire-extinguishing material and a fire-extinguishing material package.

### [Background Art]

Regarding the problem of ignition and fire, PTL 1 proposes using a fire-extinguishing liquid and a fire-extinguishing apparatus. PTL 2 proposes an automatic fire-extinguishing device to be dropped from a helicopter. PTL 3 proposes an aerosol fire-extinguishing device.

### [Citation List]

### [Patent Literatures]

PTL 1: JP H9-276440 A
PTL 2: JP 2015-6302 A
PTL 3: JP 2017-080023 A

### [Summary of the Invention]

### [Technical Problem]

PTLs 1 to 3 all propose a method of dealing with fire after a certain time has elapsed. On the other hand, from the viewpoint of minimizing damage from fire, it is desirable to perform some sort of fire-extinguishing work at a stage soon after ignition, i.e., to perform initial fire-extinguishing. Therefore, for example, a method is conceivable in which a fire-extinguishing material containing the fire-extinguishing agent component (an organic salt and an inorganic salt) disclosed in the prior art is previously placed in the vicinity of an object at risk of ignition. It is expected that this allows the fire-extinguishing material to be used for completing fire-extinguishing before a human being senses ignition of the object.

Note that a fire-extinguishing agent component can be mixed with a binder and the like to be processed into a suitable shape so that a solid fire-extinguishing material meeting the above-described purpose can be obtained. However, such a fire-extinguishing material has a room for further improvement from the viewpoint of fire-extinguishing performance.

The present invention has been made in view of the above-described circumstances, and has as its purpose to provide a fire-extinguishing material having excellent fire-extinguishing performance. In addition, the present invention has as its purpose to provide a fire-extinguishing material package in which the fire-extinguishing material is enclosed.

### [Solution to Problem]

An aspect of the present invention provides a fire-extinguishing material including a fire-extinguishing agent layer containing a fire-extinguishing agent and a binder resin, in which the fire-extinguishing agent contains at least one of an organic salt and an inorganic salt, and the fire-extinguishing agent layer has a porosity of 37% or less in a cross section thereof.

In such a fire-extinguishing material, the fire-extinguishing agent can adequately function, i.e., initial fire-extinguishing can be adequately performed. The inventors estimate that this is because when the void part in the fire-extinguishing agent layer is reduced to suppress the heat insulating effect by the void part, the heat attributable to ignition of a fire-extinguishing object is unlikely to spread inside the fire-extinguishing agent layer.

According to one mode, the fire-extinguishing agent layer may contain 70 to 97 mass% of the fire-extinguishing agent with respect to the total amount of the fire-extinguishing agent and the binder resin.

According to one mode, the salt may contain a potassium salt.

According to one mode, the salt may have an average particle size D50 of 1 to 100 µm.

According to one mode, the binder resin may contain a polyvinyl acetal-based resin.

According to one mode, the fire-extinguishing agent layer may have a thickness of 80 to 600 µm.

According to one mode, the fire-extinguishing material may further include a resin substrate disposed with the fire-extinguishing agent layer.

An aspect of the present invention provides a fire-extinguishing material package including the fire-extinguishing material and a packaging bag in which the fire-extinguishing material is to be enclosed.

### [Advantageous Effects of the Invention]

According to the present invention, there can be provided a fire-extinguishing material having excellent fire-extinguishing performance. Further, according to the present invention, there can be provided a fire-extinguishing material package in which the fire-extinguishing material is enclosed.

### [Brief Description of the Drawings]

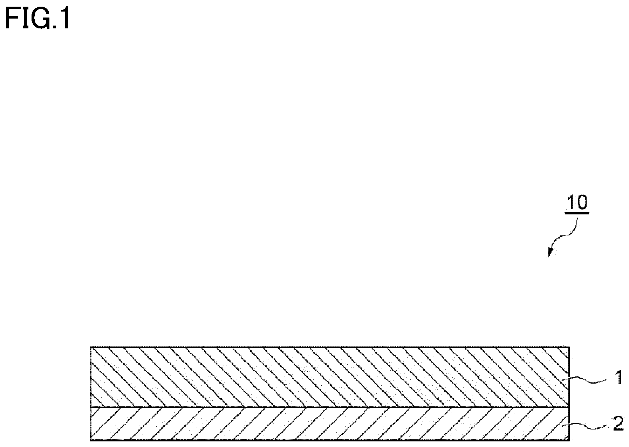

Fig. 1 is a schematic cross-sectional view of a fire-extinguishing material according to an embodiment.

### [Description of the Embodiments]

Hereinafter, suitable embodiments of the present disclosure will be described in detail. However, the present disclosure is not limited to the following embodiments.

### <Fire-Extinguishing Material>

Fig. 1 is a schematic cross-sectional view of a fire-extinguishing material according to an embodiment. A fire-extinguishing material 10 includes a fire-extinguishing agent layer 1 and a resin substrate 2 disposed with the fire-extinguishing agent layer 1. It can be said that the fire-extinguishing material 10 includes the resin substrate 2 and the fire-extinguishing agent layer 1 disposed on the resin substrate 2.

From the viewpoint of disposing the fire-extinguishing material in a desired position, the fire-extinguishing material may further include an adhesive layer or a tackiness layer. The adhesive layer or the tackiness layer may be disposed either on the fire-extinguishing agent layer side or on the resin substrate side.

### (Fire-Extinguishing Agent Layer)

The fire-extinguishing agent layer contains a fire-extinguishing agent and a binder resin.

As the fire-extinguishing agent, those having the so-called four elements (removal effect, cooling effect, suffocation effect, and negative catalytic effect) of fire-extinguishing can be appropriately used depending on a fire-extinguishing object. The fire-extinguishing agent contains at least one of an organic salt and an inorganic salt both generally having fire-extinguishing performance. The organic salt and the inorganic salt may have deliquescency.

Examples of the organic salt to function as a fire-extinguishing agent include a potassium salt, a sodium salt, and an ammonium salt. From the viewpoint of usability for the negative catalytic effect, a potassium salt can be suitably used as the organic salt. Examples of the organic potassium salt include carboxylic acid potassium salts such as potassium acetate, potassium citrate (tripotassium citrate), potassium tartrate, potassium lactate, potassium oxalate, and potassium maleate. Among these, potassium citrate can be used particularly from the viewpoint of reaction efficiency of the negative catalytic effect on combustion.

Examples of the inorganic salt to function as a fire-extinguishing agent include a potassium salt and a sodium salt. From the viewpoint of usability for the negative catalytic effect, a potassium salt can be suitably used as the inorganic salt. Examples of the inorganic potassium salt include potassium tetraborate, potassium carbonate, potassium hydrogen carbonate, potassium dihydrogen phosphate, and dipotassium hydrogen phosphate. Among these, potassium hydrogen carbonate can be used particularly from the viewpoint of reaction efficiency of the negative catalytic effect on combustion.

The organic salts or the inorganic salts may be used individually or in combination of two or more.

The salt may be granular. The average particle size D50 of the salt can be 1 to 100 µm and may be 3 to 40 µm. When the average particle size D50 is the above-described lower limit or more, dispersion in a coating liquid is facilitated. When the average particle size D50 is the above-described upper limit or less, stability in a coating liquid tends to improve, to improve the smoothness of the coating film. The average particle size D50 can be calculated by wet measurement using a laser diffractometry particle size distribution measuring device.

The amount of the fire-extinguishing agent, with respect to the total amount of the fire-extinguishing agent and the binder resin (or the total amount of the fire-extinguishing agent layer), can be 70 to 97 mass% and may be 85 to 92 mass%. When the amount of the fire-extinguishing agent is the above-described upper limit or less, the deliquescence of the salt is easily suppressed, and a uniform fire-extinguishing material is easily formed. When the amount of the fire-extinguishing agent is the above-described lower limit or more, sufficient fire-extinguishing properties are easily maintained.

The fire-extinguishing agent may contain other components except for the above-described salt. An example of other components is an oxidant for improving the reactivity of the salt. Specific examples include potassium chlorate, sodium chlorate, strontium chlorate, ammonium chlorate, magnesium chlorate, potassium nitrate, sodium nitrate, strontium nitrate, ammonium perchlorate, potassium perchlorate, basic copper nitrate, copper oxide (I), copper oxide (II), iron oxide (II), iron oxide (III), and molybdenum trioxide. Among these, potassium chlorate is preferably used.

Other examples of other components include a colorant, an antioxidant, a flame retardant, an inorganic filler, a fluidity-imparting agent, a desiccant, a dispersant, a UV absorber, a flexibility-imparting agent, and a catalyst.

These other components can be appropriately selected depending on the type of the salt and the type of binder resin. The amount of other components contained in the fire-extinguishing agent, with respect to the total amount of the fire-extinguishing agent, can be 40 mass% or less, may be 10 mass% or less, and may be 0 mass%.

The binder resin contains, as the resin, at least one of a thermoplastic resin and a thermosetting resin.

Examples of the thermoplastic resin include polyolefin-based resins such as a polypropylene-based resin, a polyethylene-based resin, a poly(1-)butene-based resin, and a polypentene-based resin, a polystyrene-based resin, an acrylonitrile-butadiene-styrene-based resin, a methyl methacrylate-butadiene-styrene resin, an ethylene-vinyl acetate resin, an ethylene-propylene resin, a polycarbonate-based resin, a polyphenylene ether-based resin, an acrylic-based resin, a polyamide-based resin, a polyvinyl chloride-based resin, polyvinyl alcohol (PVA), and a polyvinyl acetal-based resin.

Examples of the thermosetting resin include rubbers such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polyvulcanized rubber (T), silicone rubber (Q), fluororubber (FKM, FZ), and urethane rubber (U), a polyurethane resin, a polyisocyanate resin, a polyisocyanurate resin, a phenol resin, an epoxy resin, and a polyvinyl ether (PMVE)-maleic anhydride resin.

Among the above-described resins, a polyvinyl acetal-based resin can be suitably used, from the viewpoint of coating-film-forming properties. An example of the polyvinyl acetal-based resin is polyvinyl butyral (PVB).

The binder resin may contain other components except for the above-described resins (thermoplastic resins and thermosetting resins).

Examples of other components include curing agents, and from the viewpoint of stability of properties, surfactants, silane coupling agents, and antiblocking agents.

These other components can be appropriately selected depending on the type of resin. The amount of other components contained in the binder resin, with respect to the total amount of the binder resin, can be 70 mass% or less, may be 30 mass% or less, and may be 0 mass%.

The thickness of the fire-extinguishing agent layer can be 80 to 600 µm and may be 150 to 300 µm. When the thickness is the above-described lower limit value or more, fire-extinguishing performance can be easily exerted, and when the thickness is the above-described upper limit value or less, a coating film is easily formed, and bending resistance is good.

The area of the main surface of the fire-extinguishing agent layer (or also referred to as a surface perpendicular to the lamination direction of the fire-extinguishing agent layer) is not particularly limited because it is adjusted depending on use, but is set so as to be sufficiently wide relative to the area of the side surface. The area of the main surface can be, for example, 10 to 624 cm².

The porosity in the cross section of the fire-extinguishing agent layer is 37% or less, may be 30% or less, may be 25% or less, may be 20% or less, may be 15% or less, may be 10% or less, and may be 5% or less. When the porosity is 37% or less, the heat attributable to ignition of a fire-extinguishing object is likely to spread inside the fire-extinguishing agent layer. Accordingly, the fire-extinguishing agent can adequately function, i.e., initial fire-extinguishing can be adequately performed. Further, particularly when the porosity is 15% or less, this tendency appears more significantly. The lower limit of the porosity is not particularly limited, but can be 1% or more from the viewpoint of bending resistance.

The porosity means an area ratio of voids with respect to the cross-sectional area of the fire-extinguishing agent layer. The measurement method of porosity is as follows.

The fire-extinguishing material is cut using a sharp blade to obtain a cut surface in the thickness direction of the fire-extinguishing agent layer, after which the cut surface is observed through a microscope (for example, a VHX-1000, manufactured by Keyence Corporation). The observation magnification is x1000. The image of the observed cut surface is converted to a 16-bit image using image analysis software (for example, ImageJ). The image after conversion is subjected to binary coded processing to calculate an area ratio of voids with respect to the cross-sectional area of the fire-extinguishing agent layer. This process is performed for five different cut surfaces, and an average of the area ratios is determined as the porosity.

### (Resin Substrate)

Examples of the resin constituting the resin substrate include polyolefin (such as LLDPE, PP, COP, or CPP), polyester (such as PET), fluororesins (such as PTFE, ETFE, EFEP, PFA, FEP, and PCTFE), PVC, PVA, acrylic resins, epoxy resins, polyamide, and polyimide. Even when the fire-extinguishing material is disposed such that the resin substrate side faces flame, these resins melt due to the heat of flame (generally, at about 700 to 900°C), and the fire-extinguishing agent layer is easily exposed. Further, when these transparent materials are selected, visual inspection of the fire-extinguishing agent layer and checking whether the fire-extinguishing agent layer needs to be replaced are facilitated. The resin substrate may contain the above-described fire-extinguishing agent.

From the viewpoint of adjusting the water vapor permeability, a vapor deposition layer (an alumina vapor deposition layer or a silica vapor deposition layer) having water vapor barrier properties may be disposed to the resin substrate. The vapor deposition layer may be disposed to either one surface or both surfaces of the resin substrate.

The thickness of the resin substrate can be appropriately adjusted depending on the amount of heat at possible ignition, impact, an available installation space, and the like. For example, when the substrate is thick, the strength and stiffness as a fire-extinguishing material are easily obtained, and handling is facilitated. When the substrate is thin, the fire-extinguishing material can be disposed in a narrow space, and initial fire-extinguishing properties improve because the substrate melts in a short time when heated by flame. The thickness of the resin substrate can be, for example, 4.5 to 100 µm and may be 12 to 50 µm. The resin substrate may be a laminate including a plurality of resin layers.

### <Method for Producing Fire-Extinguishing Material>

The fire-extinguishing material can be formed using a composition for forming a fire-extinguishing agent layer. The composition for forming a fire-extinguishing agent layer contains a fire-extinguishing agent, a binder resin, and a liquid medium. An example of the method for producing a fire-extinguishing material will be described.

A fire-extinguishing agent and a binder resin are mixed with a liquid medium to prepare a composition for forming a fire-extinguishing agent layer. An example of the liquid medium is an organic solvent. An example of the organic solvent is a water-soluble solvent. Examples thereof include alcohols such as methanol, ethanol, isopropyl alcohol, and n-propylalcohol; ketones such as acetone and methyl ethyl ketone; glycols such as ethylene glycol and diethylene glycol; and glycol ethers such as N-methylpyrrolidone (NMP), tetrahydrofuran, and butylcellosolve. From the viewpoint that an organic salt and an inorganic salt have deliquescency, the liquid medium may be an alcohol-based solvent and specifically may be ethanol.

The amounts of the fire-extinguishing agent and the binder resin are adjusted such that the amounts in the fire-extinguishing agent layer are the above-described desired amounts. The amount of the liquid medium is appropriately adjusted depending on the use method of the composition for forming a fire-extinguishing agent layer, but can be 30 to 70 mass% with respect to the total amount of the composition for forming a fire-extinguishing agent layer. It can be said that the composition for forming a fire-extinguishing agent layer that contains the liquid medium is a coating liquid for forming a fire-extinguishing agent layer.

A fire-extinguishing material can be produced by applying the coating liquid for forming a fire-extinguishing agent layer on a resin substrate and drying the coat. As described above, voids in the fire-extinguishing agent layer need to be adequately controlled. When a coating method is used for forming the fire-extinguishing agent layer, the porosity can be easily lowered, and voids are likely to uniformly exist (without being unevenly distributed) in the fire-extinguishing agent layer. It can be said that the fire-extinguishing material including such a fire-extinguishing agent layer is excellent in fire-extinguishing performance. It is inferred that this is a distinctive advantage of a coating method in which strong external pressure is not applied when forming a layer, and is hardly obtained by, for example, a molding method such as press molding.

The coating thickness is appropriately adjusted such that a fire-extinguishing agent layer having a desired thickness is obtained, also in consideration of applying pressure on the fire-extinguishing agent layer.

Only the fire-extinguishing agent layer may be peeled from the resin substrate to be used as the fire-extinguishing material. In such a case, the resin substrate is preferably subjected to a release treatment.

The coating can be performed by a wet coating method. Examples of the wet coating method include a gravure coating method, a comma coating method, a dip coating method, a curtain coat method, a spin coat method, a sponge roll method, a die coat method, and coating by a brush.

The method for producing a fire-extinguishing material may further include applying pressure on the fire-extinguishing agent layer. This decreases the porosity more easily. From the viewpoint of easily obtaining desired porosity, the pressure application condition can be 0.2 MPa or more and may be 2.0 MPa or more. The upper limit of the pressure application condition can be 2.5 MPa or less from the viewpoint of flexibility of the coating film.

### <Fire-Extinguishing Material Package>

The fire-extinguishing material package includes the fire-extinguishing material and a packaging bag in which the fire-extinguishing material is to be enclosed. When the fire-extinguishing material is enclosed in the packaging bag, the stability of properties of the fire-extinguishing agent layer can be further improved, and excellent fire-extinguishing performance of the fire-extinguishing material is easily maintained. The fire-extinguishing material may be enclosed in a depressed state in the packaging bag.

The packaging bag can be formed by, for example, heat-sealing two resin films at four edges. Examples of the resin constituting the resin films include polyolefin (such as LLDPE, PP, COP, or CPP), polyester (such as PET), fluororesins (such as PTFE, ETFE, EFEP, PFA, FEP, and PCTFE), PVC, PVA, acrylic resins, epoxy resins, polyamide, and polyimide. These resins easily melt due to the heat of flame (generally, at about 700 to 900°C) to expose the enclosed fire-extinguishing material. Further, when these transparent materials are selected, visual inspection of the fire-extinguishing material and checking whether replacement are facilitated. The resin films may contain the above-described fire-extinguishing agent.

The water vapor permeability (in accordance with JIS K 7129, under conditions of 40°C/90%RH) of the resin film is not particularly limited because it can be designed depending on the type of fire-extinguishing agent, but can be 10.0 g/(m²·day) or less and may be 1.0 g/ (m²·day) or less.

From the viewpoint of adjusting the water vapor permeability, a vapor deposition layer (an alumina vapor deposition layer or a silica vapor deposition layer) having water vapor barrier properties may be disposed to the resin film. The vapor deposition layer may be disposed to either one surface or both surfaces of the resin film.

The fire-extinguishing material and the fire-extinguishing material package can be installed to or in the vicinity of an object at risk of ignition. Examples of the installation method include pasting, mounting, and packaging. Examples of the object at risk of ignition include building materials such as an electric wire, an electric switchboard, a distribution board, a control board, a rechargeable battery (such as a lithium ion battery), a wallpaper for building materials, and a ceiling material, and members such as a box for recovery of lithium ion batteries, a trash can, an automobile-related member, a wall outlet, and an outlet cover.

For example, in a device having installed therein the fire-extinguishing material or the fire-extinguishing material package, initial fire-extinguishing is automatically performed for ignition in the device. Therefore, it can be said that such a device is a device having an automatic fire-extinguishing function.

### EXAMPLES

The present invention will be described in more detail by the following examples, but the present invention is not limited to the examples.

### (Example 1)

Potassium chlorate (KClO₃) and tripotassium citrate were pulverized in an agate mortar to have an average particle size D50 of 12 µm or less. The tripotassium citrate is a deliquescent salt. This was prepared in an amount of 87 parts by mass, and added and mixed, together with 9 parts by mass of a polyvinyl butyral resin (manufactured by Dainichiseika Color & Chemicals Mfg. Co., Ltd.) and 4 parts by mass of a silane coupling agent (X-12-1287A, manufactured by Shin-Etsu Chemical Co., Ltd.), to a liquid medium containing 148 parts by mass of ethanol and 7 parts by mass of isopropyl alcohol, to thereby prepare a composition for forming a fire-extinguishing agent layer.

A fire-extinguishing material was formed by applying the composition for forming a fire-extinguishing agent layer on one surface of a polyethylene terephthalate (PET) substrate (product name: E7002, manufactured by Toyobo Co., Ltd., thickness: 50 µm) using an applicator such that a fire-extinguishing agent layer after drying had a thickness of 150 µm, and drying the coat at 75°C for 7 minutes.

### (Example 2)

A fire-extinguishing material was prepared in the same manner as in Example 1 except that the fire-extinguishing agent layer had a thickness of 300 µm.

### (Example 3)

The fire-extinguishing material obtained in Example 2 was cut out to a 5 cm square. The fire-extinguishing material was pressed in the lamination direction under the condition of 0.4 MPa using a hydraulic molder (manufactured by Toho International Inc., model: TT-5-2) to prepare a fire-extinguishing material.

### (Example 4)

A fire-extinguishing material was prepared in the same manner as in Example 3 except for the press condition was 2.0 MPa.

### (Comparative Example 1)

A fire-extinguishing material was formed by applying the composition for forming a fire-extinguishing agent layer on one surface of a polyethylene terephthalate (PET) substrate (product name: E7002, manufactured by Toyobo Co., Ltd., thickness: 50 µm) using a spray such that a fire-extinguishing agent layer after drying had a thickness of 200 µm, and drying the coat at 75°C for 7 minutes.

### <Various Evaluations>

The fire-extinguishing material obtained in each Example was evaluated as follows. The results are shown in Table 1.

### (Calculation of Porosity in Cross Section of Fire-Extinguishing Agent Layer)

The fire-extinguishing material was cut using a sharp blade to obtain a cut surface in the thickness direction of the fire-extinguishing agent layer. The cut surface was observed through a VHX-1000 microscope (manufactured by Keyence Corporation). The observation magnification was x1000. The image of the observed cut surface was converted to a 16-bit image using an ImageJ image analysis software. The image after conversion was subjected to binary coded processing to calculate an area ratio of voids with respect to the cross-sectional area of the fire-extinguishing agent layer. This work was performed for five different cut surfaces, and an average of the area ratios was determined as the porosity in the cross section of the fire-extinguishing agent layer.

### (Fire-Extinguishing Performance)

An ignition agent was placed on a base disposed in the center of the bottom of a below-described iron container. Further, the fire-extinguishing material (area: 50 mm × 50 mm) obtained in each Example was pasted to the inside of the top surface of the container such that the fire-extinguishing agent layer side faces the ignition agent. In this state, the ignition agent was lit, and the fire-extinguishing process was observed and evaluated according to the following criteria. The distance between the fire-extinguishing material and the ignition agent was adjusted by changing the height of the base.

### - Iron container -

Container shape: Rectangular parallelepiped of 20 cm in length, 30 cm in width, and 40 cm in height. For preventing a fire from naturally extinguishing, five vent holes having a diameter of 8.5 mm were formed to each of four side surfaces of the container in height positions of 5, 12.5, 20.0, 27.5, and 35.0 cm from the top surface.

Ignition agent: 1.5 g of solid fuel (15 mm in length, 15 mm in width, and 10 mm in height, Captain Stag M-6710 Fire Block).

### - Evaluation criteria -

A: Fire can be extinguished when the distance from the fire-extinguishing material to the ignition agent is 20 cm.
B: Fire cannot be extinguished when the distance from the fire-extinguishing material to the ignition agent is 20 cm, but can be extinguished when 10 cm.
C: Fire cannot be extinguished when the distance from the fire-extinguishing material to the ignition agent is 10 cm.

### (Bending Properties)

A mandrel test was performed to the fire-extinguishing material (area: 50 mm × 50 mm) obtained in each Example in accordance with JIS K 5600-5-1. The appearance of the fire-extinguishing material after the test was visually observed and evaluated according to the following criteria. Note that when cracks of the fire-extinguishing agent layer and peeling from the PET substrate do not occur, it was determined as having bending properties.

### - Evaluation criteria -

A: Bending properties are demonstrated when the diameter of the mandrel is 20 mm.

### (Storage Stability)

Two barrier films (water vapor transmittance is 0.2 to 0.6 g/ (m²·day), in accordance with JIS K 7129, under conditions of 40°C/90%RH) each including a sealant layer (L-LDPE (linear low-density polyethylene) resin, thickness: 30 µm) and a substrate layer (PET (polyethylene terephthalate) resin having a silica vapor deposition layer, thickness: 12 µm) were prepared. With these two barrier films, the fire-extinguishing material (50 mm × 50 mm) obtained in each Example was covered, and the barrier films were heat-sealed at four edges to enclose the fire-extinguishing material. The heat seal condition was 140°C and 2 seconds. This was used as an evaluation sample.

The evaluation sample was left to stand and stored for 10 hours under the condition of 85°C/85%RH, and the total light transmittance change rate was calculated from the total light transmittances of the fire-extinguishing material before and after storing. The total light transmittance was measured using a BYK-Gardner Haze-Guard Plus haze meter (manufactured by BYK Co.).
The measurement was performed with the fire-extinguishing material fixed such that light travelling from a light source into an integrating sphere passes through the fire-extinguishing material.

Total light transmittance change rate (%) = (total light transmittance after storing - total light transmittance before storing)/total light transmittance before storing × 100

### - Evaluation criteria -

A: The total light transmittance change rate was 50% or less.
B: The total light transmittance change rate was 50% or more and 70% or less.

**[Table 1]**

| | Coating method | Press | Thickness of fire-extinguishing layer (µm) | Porosity (%) | Fire-extinguishing performance | Bending properties | Storage stability |
|---|---|---|---|---|---|---|---|
| Example 1 | Applicator | No | 150 | 25 | B | A | A |
| Example 2 | Applicator | No | 300 | 25 | A | A | A |
| Example 3 | Applicator | Yes | 210 | 20 | A | A | A |
| Example 4 | Applicator | Yes | 200 | 3 | A | A | A |
| Comparative Example 1 | Spray | No | 200 | 38 | C | A | B |

### [Reference Signs List]

- 1: Fire-extinguishing agent layer
- 2: Resin substrate
- 10: Fire-extinguishing material

## Claims

1. A fire-extinguishing material comprising a fire-extinguishing agent layer containing a fire-extinguishing agent and a binder resin, wherein
the fire-extinguishing agent contains at least one of an organic salt and an inorganic salt, and
the fire-extinguishing agent layer has a porosity of 37% or less in a cross section of the fire-extinguishing agent layer.

2. The fire-extinguishing material according to claim 1, wherein the fire-extinguishing agent layer contains 70 to 97 mass% of the fire-extinguishing agent with respect to a total amount of the fire-extinguishing agent and the binder resin.

3. The fire-extinguishing material according to claim 1 or 2, wherein the salt contains a potassium salt.

4. The fire-extinguishing material according to any one of claims 1 to 3, wherein the salt has an average particle size of 1 to 100 µm.

5. The fire-extinguishing material according to any one of claims 1 to 4, wherein the binder resin contains a polyvinyl acetal-based resin.

6. The fire-extinguishing material according to any one of claims 1 to 5, wherein the fire-extinguishing agent layer has a thickness of 80 to 600 µm.

7. The fire-extinguishing material according to any one of claims 1 to 6, further comprising a resin substrate disposed with the fire-extinguishing agent layer.

8. A fire-extinguishing material package comprising the fire-extinguishing material according to any one of claims 1 to 7 and a packaging bag in which the fire-extinguishing material is to be enclosed.
